# EUROPEAN PATENT APPLICATION

(11) **EP 4 708 091 A1**
(43) Date of publication of application: **11.03.2026**
(21) Application number: 25185700.9
(22) Date of filing: 26.06.2025
(51) Int. Cl.: G06F 21/44, G06F 21/60, G06F 21/62, H04L 9/40

(54) **DATA ACCESS METHOD, APPARATUS, DEVICE AND READABLE STORAGE MEDIUM**

(30) Priority: 05.09.2024 CN 202411247087
(71) Applicant: Beijing Zitiao Network Technology Co., Ltd., Beijing 100190 (CN)
(72) Inventor: Wu, Bofeng, Beijing, 100028 (CN); Chen, Dian, Beijing, 100028 (CN); Yan, Lu, Beijing, 100028 (CN); Zhang, Yao, Beijing, 100028 (CN); Chen, Yun, Beijing, 100028 (CN); Wu, Ye, Beijing, 100028 (CN)
(74) Representative: Isarpatent

(57) **Abstract**

Embodiments of the disclosure provide a data access method, an apparature, a device and a readable storage medium. The method includes: in response to a demand of processing the data resource generated in a target application, sending a data access authorization request for the data resource to a plurality of clients of the target application, the plurality of clients being associated with the data resource. The authorization information for the data access authorization request is received respectively from at least one of the plurality of clients. At least one access credential respectively corresponding to the at least one client is obtained based on the authorization information. The target data associated with the at least one client in the data resource is accessed with the at least one access credential to process the target data.

## Description

### FIELD

Example embodiments of the present disclosure generally relate to the field of computers, and in particular, to a data access method, an apparatus, a device, and a readable storage medium.

### BACKGROUND

With the increasing importance of data security, improving the data security has become a topic with urgent need of attention. Especially in the data interaction process between a user terminal and cloud, how to ensure the security of the data generated by the user terminal is a problem to be solved urgently.

### SUMMARY

In a first aspect of the present disclosure, a data access method is provided. The method may be applied at a use terminal of a data resource, and comprises: sending, in response to a demand of processing the data resource generated in a target application, a data access authorization request for the data resource to a plurality of clients of the target application, the plurality of clients being associated with the data resource; receiving authorization information for the data access authorization request respectively from at least one of the plurality of clients; obtaining, based on the authorization information, at least one access credential respectively corresponding to the at least one client; and accessing, with the at least one access credential, target data associated with the at least one client in the data resource to process the target data.

In a second aspect of the present disclosure, a data access method is provided. The method is applied to the client of a target application, and comprises: sending, in response to a credential management service passing verification, an access credential for data access to the credential management service; processing, with a processing credential corresponding to the access credential, target data generated by the client in the target application; storing the processed target data to a data storage side; receiving a data access authorization request from a use terminal of a data resource, the data resource comprising the target data; generating, in response to a positive indication of the data access authorization request, authorization information for the data access authorization request; and sending the authorization information to the use terminal of the data resource.

In a third aspect of the present disclosure, a data access method applied to a credential management service is provided, and comprises: sending an attestation report to a plurality of clients of a target application, the attestation report indicating a reliability of an environment for storing access credentials; receiving a plurality of access credentials respectively corresponding to the plurality of clients from the plurality of clients, wherein an access credential of the plurality of access credentials is configured to access data associated with the corresponding client; and sending, in response to receiving an access credential request for at least one client of the plurality of clients from a use terminal of a data resource, the access credential corresponding to the at least one client is sent to the use terminal of the data resource.

In a fourth aspect of the present disclosure, an electronic device is provided. The device comprises at least one processing unit; and at least one memory coupled to the at least one processing unit and storing instructions for execution by the at least one processing unit. The instructions, when executed by the at least one processing unit, cause the electronic device to perform the method of the first aspect.

In a fifth aspect of the present disclosure, a computer-readable storage medium is provided. The medium stores thereon a computer program, and the computer program, when executed by a processor, implements the method of the first aspect.

It should be understood that the content described in this section is neither intended to limit the key features or important features of embodiments of the present disclosure, nor is it intended to limit the scope of the present disclosure. Other features of the present disclosure will become readily understood from the following description.

### BRIEF DESCRIPTION OF DRAWINGS

The above and other features, advantages, and aspects of various embodiments of the present disclosure will become more apparent from the following detailed description taken in conjunction with the accompanying drawings. In the drawings, the same or similar reference numbers refer to the same or similar elements, wherein:
FIG. 1 illustrates a schematic diagram of an example environment in which embodiments of the present disclosure can be implemented;
FIG. 2 illustrates a block diagram of a data access process according to some embodiments of the present disclosure;
FIG. 3 illustrates a schematic principle diagram of a data access process according to some embodiments of the present disclosure;
FIG. 4 illustrates a block diagram of a data access process according to some other embodiments of the present disclosure;
FIG. 5 illustrates a schematic diagram of an interactive interface according to some embodiments of the present disclosure;
FIG. 6 illustrates a block diagram of a data access process according to some other embodiments of the present disclosure;
FIG. 7 illustrates a schematic structural block diagram of a data access apparatus according to some embodiments of the present disclosure;
FIG. 8 illustrates a schematic structural block diagram of a data access apparatus according to another embodiment of the present disclosure;
FIG. 9 illustrates a schematic structural block diagram of a data access apparatus according to another embodiment of the present disclosure; and
FIG. 10 illustrates a block diagram of an electronic device in which one or more embodiments of the present disclosure may be implemented.

### DETAILED DESCRIPTION

Embodiments of the present disclosure will be described in more detail below with reference to the accompanying drawings. While certain embodiments of the present disclosure are shown in the accompanying drawings, it should be understood that the present disclosure may be implemented in various forms, and should not be construed as limited to embodiments set forth herein, but rather, these embodiments are provided for a more thorough and complete understanding of the present disclosure. It should be understood that the drawings and embodiments of the present disclosure are for example purposes only and are not intended to limit the scope of the present disclosure.

In the description of embodiments of the present disclosure, the terms "including" and its variants should be read as open terms that mean include "including but are not limited to". The term "based on" should be read as "based at least in part on". The terms "one embodiment" or "the embodiment" should be read as "at least one embodiment". The term "some embodiments" should be read as "at least some embodiments". Other explicit and implicit definitions may also be included below.

Herein, unless explicitly stated, performs one step "in response to A" does not imply that this step is performed immediately after "A", but may include one or more intermediate steps.

It should be understood that the data involved in the technical solution (including but not limited to the data itself, the obtaining, using, storing or deleting of the data) should comply with the requirements of the corresponding laws and regulations and relevant regulations.

It should be understood that before using the technical solutions disclosed in embodiments of the present disclosure, relevant users should be informed of the types, use ranges, usage scenarios, and the like of the information related to the present disclosure in an appropriate manner according to relevant laws and regulations, and the authorization of the related users may be obtained, wherein the relevant users may include any type of rights subject, such as individuals, businesses, and groups.

For example, in response to receiving an active request of a user, prompt information is sent to the related user to explicitly prompt the related user that the operation requested to be performed will require obtaining and usage of the information of the related user, so that the related user can autonomously select, according to the prompt information, whether to provide the information to the software or hardware of the electronic devices, applications, servers, or storage media that perform the operations of the technical solution of the present disclosure.

As an optional but non-limiting implementation, in response to receiving an active request of a related user, the way of sending the prompt information to the related user may, for example, be a pop-up window, and the prompt information may be presented in the form of text in the pop-up window. In addition, the pop-up window may further carry a selection control for the user to select "agree" or "not agree" to provide the information to the electronic device.

It may be understood that the above of notifying and obtaining the user authorization are merely illustrative, and does not limit the implementations of the present disclosure, and other methods that comply with relevant laws and regulations are also be applicable to the implementations of the present disclosure.

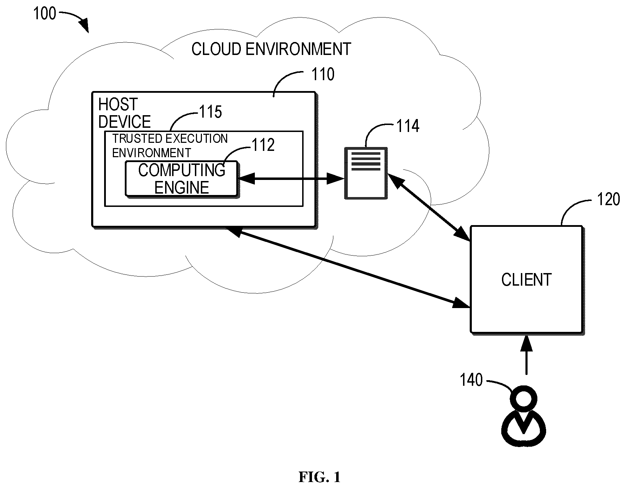

FIG. 1 illustrates a schematic diagram of an example environment 100 in which embodiments of the present disclosure can be implemented. As shown in FIG. 1, the example environment 100 may include a client 120 of a user 140 and a host device 110 in a cloud environment.

As shown in FIG. 1, the host device 110 may be deployed with a trusted execution environment 115. In this trusted execution environment 115, a computing engine 112 may be run. The trusted execution environment (Trusted Execution Environment, TEE) is a hardware-based security technology, which constructs a secure computing environment isolated from external by dividing a secure part and an unsecure part. The secure computing environment may ensure confidentiality and integrity of data and code loaded inside the trusted execution environment 115. The trusted execution environment 115 is isolated from a common environment, has a higher security level, and is adapted to perform processing on sensitive data therein. The computing engine may provide a confidential cloud computing service (Confidential Cloud Computing, CCC) running on the trusted execution environment 115, and the confidential cloud computing service provided by the computing engine aims to protect the data security of the user.

A credential management service may be executed in the trusted execution environment 115. The credential management service may be performed independently of the host device 110. The credential management service may be a trusted key service (Trusted Key Service, TKS). The credential management service may serve as a security service running in the trusted execution environment 115, and aims to provide the user with access credential management and proxy service based on hardware protection.

With the credential management service, the access credential obtained from the client 120 may be stored in an access credential management database 114. In addition, the host device 110 may store data resources generated in a target application from the client 120 to a data storage side 116. It is not difficult to understand that the above data resource is the data resource generated in the target application and obtained after permission and authorization of the user 140. For example, the data resource may comprise geographical location data, click behavior data, and the like.

In some embodiments, the host device 110 communicates with the client 120 to implement data access and analysis. The client 120 may be any type of mobile terminal, fixed terminal, or portable terminal, comprising a mobile phones, a desktop computer, a laptop computer, a notebook computer, a netbook computer, a tablet computer, a media computer, a multimedia tablet, a personal communication system (PCS) device, a personal navigation device, a personal digital assistant (PDA), an audio / video player, a digital camera/camcorder, a positioning device, a television receiver, a radio broadcast receiver, an e-book device, a gaming device, or any combination of the foregoing, including accessories and peripherals of these devices, or any combination thereof. In some embodiments, the client 120 can also support any type of interface for the user (such as a "wearable" circuit, etc.).

The host device 110 may be an independent physical server, or may be a server cluster or a distributed system composed of multiple physical servers, or may be a cloud server that provides basic cloud computing services such as cloud services, cloud databases, cloud computing, cloud functions, cloud storage, network services, cloud communications, middleware services, domain name services, security services, content distribution networks, and big data and artificial intelligence platforms, etc. The host device 110 may comprise, for example, a computing system/server, such as a mainframe, an edge computing node, a computing device in a cloud environment, or the like. The host device 110 may provide a background service of data management for the client 120. One example of the host device 110 is a host machine of a cloud vendor.

A communication connections may be established between the host device 110 and the client 120. The communication connection may be established in a wired manner or a wireless manner. The communication connections may include, but are not limited to, Bluetooth connections, mobile network connections, universal serial bus connections, wireless fidelity connections, etc., embodiments of the present disclosure are not limited in this respect.

It should be understood that the structures and functions of the various elements in the environment 100 are described for example purposes only and do not imply any limitation to the scope of the present disclosure. In other words, the structure, function, quantity and link relationship of the elements in the environment 100 may be changed according to actual needs. The present disclosure is not limited in this respect.

At present, there are many potential safety risks in an interaction process between the client and the host device in the cloud. For example, for a user terminal, the user does not perceive whether the data is encrypted during transmission, or the use and computing processes of the data. This results in snooping, unauthorized usage or even sharing of the data, without the user being informed of, there is a risk of personal information leakage.

In embodiments of the present disclosure, an improved solution for data access is provided. In this solution, a use terminal of a data resource sends a data access authorization request for the data resource to a plurality of clients of a target application in response to a demand of processing the data resource generated in the target application, the plurality of clients being associated with the data resource. Authorization information for the data access authorization request is received respectively from at least one of the plurality of clients. At least one access credential corresponding to the at least one client is obtained based on the authorization information. With the at least one access credential, target data associated with the at least one client is accessed in the data resource, to process the target data.

Through the above process, sending the data access authorization requests to a plurality of clients by the use terminal of the data resource is considered as an point-to-point request, which can prevent man-in-the-middle attacks. The use terminal of the data resource receives the authorization information fed back by the at least one client for the data access authorization request, and the obtained data includes the data resource generated in the target application running at the client, which ensures that the obtaining of the user data is completed with user authorization. Through the improved measures, the data security can be significantly enhanced, unauthorized data resource access and leakage risks are avoided, and the data security problem is solved.

Some example embodiments of the present disclosure will be described in detail below with reference to examples of the accompanying drawings. It should be understood that the interfaces shown in the drawings are merely examples, and actually there may be various other interface designs. Individual graphical elements in the interfaces may have different arrangements and different visual representations, one or more of which may be omitted or replaced, and one or more other elements may also be present. Embodiments of the present disclosure are not limited in this respect.

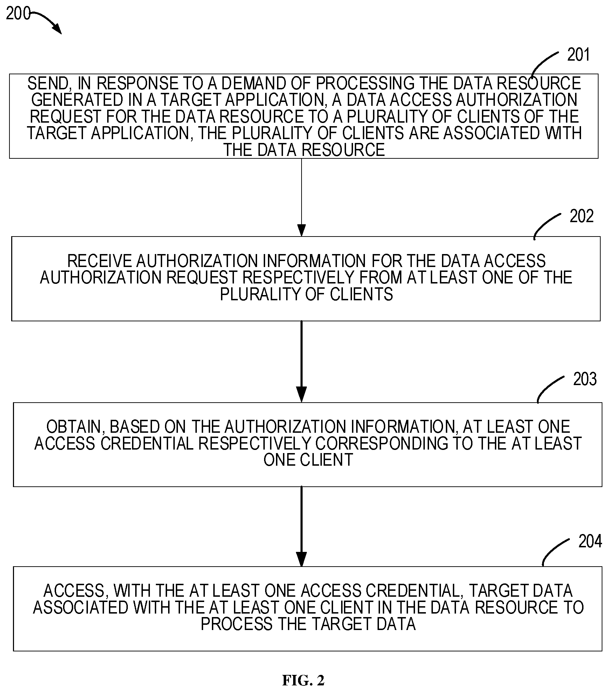

FIG. 2 shows a block diagram of a data access process 200 according to some embodiments of the present disclosure. The data access process may be implemented at the host device 110, which may serve as the use terminal of the data resource. The data access process 200 shown in FIG. 2 is described below with reference to FIG. 1.

At block 201, the host device 110 sends a data access authorization request for a data resource to a plurality of clients of a target application in response to a demand of processing the data resource generated in the target application, the plurality of clients being associated with the data resource. For example, on the host device 110 side, scenarios such as a data access task, a data analysis task, and the like executed by the computing engine 112 may be utilized, and execution of the data access task or the data analysis task by the computing engine 112 may be used as a trigger instruction for generating and sending the data access authorization request.

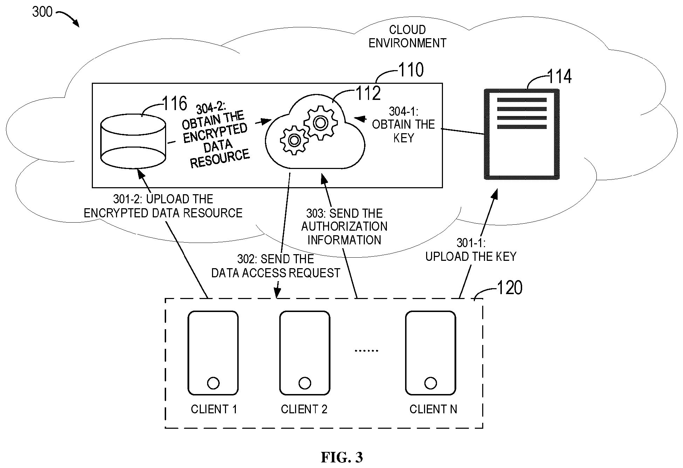

FIG. 3 shows a schematic diagram of a data access process 300 according to some embodiments of the present disclosure. As shown in FIG. 3, for example, the host device 110 performs a point of interest recommendation task through the computing engine 112, which may trigger the sending of the data resource access request at step 302. As shown in FIG. 3, although the data storage side 116 and the computing engine 112 are shown in one host device 110, in an actual scenario, the data storage side 116 and the computing engine 112 may be distributed on different host devices 110. In addition, the number of host devices 110 may also be more than one.

For the task of the computing engine 112, the host device 110 may determine at least one client 120 based on multi-dimensional factors such as correlation, quality, and reliability of the data resource. The host device 110 sends the generated data access authorization request to the determined at least one client 120.

At block 202, the host device 110 receives authorization information for the data access authorization request respectively from at least one of the plurality of clients. The authorization information may be sent as feedback to the data access authorization request to the host device 110 by the client 120.

The client 120 receives the data access authorization request, and the user 140 may authorize the data access authorization request, or may refuse to authorize the data access authorization request. If the user 140 refuses to authorize the data access authorization request, the entire process terminates. On the contrary, with reference to FIG. 3, if the user 140 agrees to authorize the data access authorization request, the client 120 generates the authorization information and sends the authorization information to the host device 110.

Generally, the authorization information may comprise at least an access token of the client 120 (or the user 140), and the access token may indicate identification information of the client. In addition, the authorization information may further comprise additional information such as an authorized usage range, an authorized usage purpose, and an authorized usage period of the authorized data resource. For example, the authorized usage range of the data resource may indicate a category of data resources generated in the target application. The authorized usage period may be one day, one hour, etc. The authorized usage purpose may be only authorizing the host device 110 to perform a certain data computing task or perform a certain data analysis task .

At block 203, the host device 110 obtains at least one access credential respectively corresponding to the at least one client based on the authorization information. As shown in FIG. 3, after receiving the authorization information, with the credential management service at step 304-1, the host device 110 may obtain the access credentials of the data resource from an access credential management database 114 . In addition, the host device 110 may also obtain data resources from the data storage side 116 at step 304-2.

For example, the access credential of the data resource may be uploaded by the client 120 to the access credential management database 114 at step 301-1. In addition, the client 120 may process the data resource generated in the target application by the processing credential at step 301-2, and then upload the data resource to the data storage side 116. As an example, processing the data resource by the processing credential may comprise encrypting the data resource with the processing credential. What is corresponding to the processing credential is the access credential uploaded to the access credential management database 114. For example, the encrypted data resource may be decrypted with the access credential.

On one hand, the host device 110 may obtain the access credential for the data resource from the access credential management database 114. On the other hand, the data resource processed by the processing credential may be obtained from the data storage side 116.

At block 204, with the at least one access credential, the host device 110 accesses target data associated with the at least one client in the data resource, to process the target data. Based on the decrypted data resource, the computing engine 112 may perform the corresponding computing and processing tasks. With the at least one access credential, an execution process of accessing the target data associated with the at least one client may be completed in the trusted execution environment 115, ensuring that the data remains secure during processing, and preventing the data leakage and abuse.

Through the above process, the host device 110 ensures validity access to the data resource through the feedback of the authorization information, and prevents unauthorized obtaining from the data resource. Meanwhile, through the mechanism of the access credentials, the security of the data in the transmission and use process is ensured, and data leakage and tampering are prevented.

The above is an overview of the overall flow of the host device 110. Next, it will be described in detail how to obtain the access credential of the data resource and obtain the data resource. First, a process of obtaining the access credential of the data resource is described. In some implementations, the host device 110 determines an access token of the at least one client based on the authorization information. The access credential request for the data resource is sent to a credential management service, which includes at least an access token. At least one access credential corresponding to the at least one client is respectively received from the credential management service.

The host device 110 first determines the access token of the client 120 based on the authorization information fed back by the client 120. The access token may indicate identification information of the client 120. In the access credential management database 114, the credential management service configures each access credential entry as consisting of unique identification information and a corresponding access credential. The identification information may be a unique identification of the client. The access credential may then be used to decrypt the data resource.

The host device 110 sends the access credential request for the data resource to the credential management service that manages the data resource access credential, the access credential request including at least the access token. Based on a structured storage mode, the credential management service can quickly and accurately retrieve the corresponding access credential according to the identification information in the access credential management database 114. As such, the host device 110 may receive the access credential from the credential management service. The credential management service may be a security service running in the trusted execution environment.

The access credential request may also include a security report indicating a reliability of the trusted execution environment 115 for processing the data resource. The host device 110 sends the access credential request for the data resource to the credential management service, and the access credential request may include both the access token and the security report. The security report is used to prove that the trusted execution environment 115 of the computing engine 112 for processing the data resource is secure and reliable and conforms to a predetermined security standard.

For example, the security report may include an operating system version of the host device 110 where the computing engine 112 is located. In the case that the computing engine 112 runs in a virtual machine, the version and configuration of the virtual machine software is reported. In addition, the security report may also include a code version of a particular application or software running in the computing engine 112. The operating system version may indicate the security and update status of the system environment. The version of the virtual machine software may indicate the security of the virtualized environment. The code version of the particular application or software may indicate that the application or software is not tampered with, and is running in the expected state.

The credential management service may perform verification on the security report. If the verification is determined to pass, the host device 110 is allowed to receive the access credentials of the data resource. By setting the security report in the access credential request, the security of the computing engine 112 may be proven. For example, by verifying the version and ensuring that both the system component and the software have applied the latest security patch, the risk of malware or unsafe software being used in the data request process can be reduced.

The obtaining of the access credentials of the data resource is described above. Next, the obtaining of the data resource will be described. In some implementations, the host device 110 obtains the data resource from the data storage side 116, the data resource is stored to the data storage side 116 by the provider based on an received attestation report, the attestation report indicating a reliability of the environment for storing the data resource .

The data resource is authorized by the client 120 and stored to the data storage side 116. The authorization of the client 120 may include performing verification on the attestation report sent by the host device 110, and the authorization is obtained after obtaining a conclusion that the verification is passed.

The attestation report may indicate reliability of the environment storing the data resource. For example, the attestation report may include information such as Trusted Computing Base (TCB), an application metric value, application custom data, and a hardware signature, etc. The application metric value generally refers to a set of values obtained after a measurement is performed on an application program or a component thereof in the trusted execution environment. These values are used to verify the integrity and authenticity of the application, ensuring that the application is not tampered with. The application custom data generally refers to data defined by an application according to its own requirements and contained in the attestation report. The data may be application-specific configurations, identification information, or other content that helps to prove application security and reliability.

After the client 120 verifies the attestation report, the access credential may be uploaded to the access credential management database 114, where the credential management service is responsible for managing the access credential. In addition, after encrypting part of the data resource with a processing credential, the client 120 uploads the data resource to the data storage side 116 in the host device 110. That is to say, after the verification of the attestation report by client 120 passes, the client 120 may authorize the data resource generated by the target application in the client 120 to be processed and uploaded to the data storage side 116.

When the host device 110 sends the data access authorization request to the client 120 based on a task to be executed by the computing engine 112, the client 120 may authorize the access. That is to say, the host device 110 may be authorized to obtain all or part of the data resource that has been stored in the data storage side 116.

Through the above process, the client 120 can securely upload the data resources to the data storage side 160 and authorize the computing engine 112 of the host device 110 to access these data resources when needed. It is ensured that the access and transmission process of the data resource meets the security requirement.

For a client of the at least one client, the target data stored to the data storage side 116 is the data that is generated in the target application, processed by the client with the processing credential corresponding to the access credential of the client, and then transmitted to the data storage side 116.

At the client 120, the processing of the data generated in the target application may comprise processing the data generated in the target application with the processing credential and then transmitting the processed data to the data storage side 116. The processing credential may correspond to the access credential uploaded to the access credential management database 114 by the client 120. For example, the credential management service may perform decryption on the data resource based on the access credential of the data resource. The decryption may be performed in the trusted execution environment 115.

In the trusted execution environment 115, the host device 110 may also process the data resource and the data resource access credential to achieve data security. Specifically, in response to a preset condition being satisfied, the target data and the access credential of the target data are removed from the trusted execution environment, where the preset condition includes a termination of access to the target data or an expiry of an authorized usage period of the target data.

Based on the obtained access credential, the host device 110 may perform a decryption operation on the data resource in the trusted execution environment 115. The decryption process is completed in the trusted execution environment 115, which ensures that the decrypted data resource is not exposed to any untrusted environment.

The decrypted data resource is located in the trusted execution environment 115, and the host device 110 performs, based on the data access task(s), access to the data resource processed by the access credential. These tasks may include data analysis, computing, and the like. Since these accesses are all performed in the trusted execution environment 115, the integrity and confidentiality of the data resource can be effectively protected.

According to the predefined preset condition, the host device 110 may remove the data resource and the corresponding access credential in the trusted execution environment 115 when the access of the data access data resource terminates or the authorized usage period of the data resource is expired. The preset condition may be configured according to different security policies, ensuring that the data resource and the access credential do not retain for a long time. For example, the preset condition may indicate that after the data analysis task or the data access task is completed, the data resource and the corresponding access credential are removed. Alternatively, the preset condition may indicate that after the authorized usage period of the data resource is expired, the data resource and the corresponding access credential are removed.

Through the above process, the decryption and data access are performed in the trusted execution environment, which reduces the risk of the data resource (especially the data resource that may involve sensitive information) being exposed in an untrusted environment. In addition, through the preset condition, it is ensured that the data resource and the access credential are safely removed when the access terminates or the authorized usage period is expired, thereby preventing unauthorized usage of the data resource. On the other hand, the data security level is improved through transparent security authentication and strict data access procedures.

Access to the data resource is performed based on the data access authorization request. The data access authorization request may be for a specified provider. The following describes a process of generating a data access authorization request. The host device 110 determines, based on a data processing task to be executed, at least one data resource type corresponding to the data processing task, the data resource includes data of at least one data resource type. The data access authorization request is generated based on the at least one data resource type.

The data processing tasks may include a variety of categories. For example, the data processing task may include analyzing behavior data of a new registered user of an application to optimize the user experience.

The host device 110 determines a data resource obtaining range and a data resource type corresponding to the data processing task based on the data processing task of the computing engine 112. The data resource obtaining range may correspond to the client, for example, a new registered user (for example, a user who has registered for no more than one month), a user in a certain region, and the like.

Based on the data resource obtaining range and the data resource type, the host device 110 may generate a data access authorization request. For example, the data access authorization request may include a purpose, a data type, a usage period, and the like corresponding to the data access task. The purpose corresponding to the data access task may be content recommendation, improvement function, or the like. The data types may indicate different types of data resources. The usage period may be one day, 5 days, etc.

Through the above process, after receiving the data access authorization request through the client, the user can clearly know which data resources are accessed and used. That is, since the data access authorization request comprises information such as detailed request purpose, data resource obtaining range, and data resource type, the user has clearer understanding and control on data usage.

For the data resource type(s) involved in the generation process of the data access authorization request, the determining process may comprise the following process: determining a plurality of data resource types corresponding to the data processing task; and determining the at least one data resource type based on association degrees between the data of the plurality of data resource types and the plurality of clients.

**One** data processing task may generally correspond to a plurality of data resource types. For data of the plurality of data resource types, an level may be determined based on its association degree with the client, for example, a high-level data resource, a mid-level data resource, a low-level data resource. The division criterion for levels may be determined according to the actual situation.

The data resource types may be determined by performing filtering on multiple data resource types. For example, only the high-level data resource may be reserved. That is to say, only the data access authorization request is generated for the high-level data resource. Alternatively, the high-level data resource and the mid-level data resource may be reserved, thereby generating the data access authorization request for the high-level data resource and the mid-level data resource. Through the above process, the data resource type is filtered out, and only the access request is generated for the important data. Frequent data request notification is avoided, and the interference with the user is reduced.

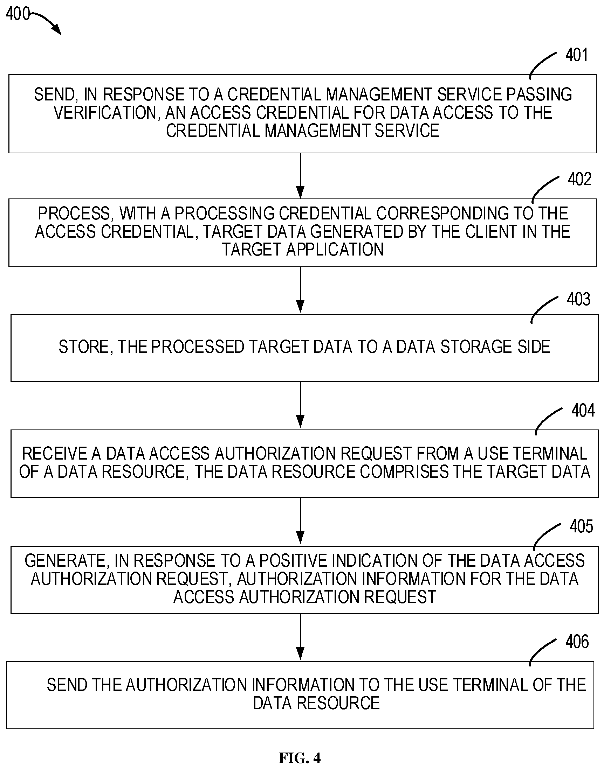

FIG. 4 shows a schematic diagram of a data access process 400 according to some embodiments of the present disclosure. This data access process may be implemented at the client 120 of the target application. The data access process shown in FIG. 4 is described below with reference to FIG. 1.

As shown in FIG. 4, at block 401, in response to the credential management service passing verification , the access credential for data access is sent to the credential management service.

The credential management service may send an attestation report to the client 120. The attestation report may be sent by the credential management service, or may be sent by the host device 110. The attestation report may attest the security of the host device 110. For example, the attestation report may comprise information such as Trusted Computing Base (TCB), an application metric value, application custom data, and a hardware signature. The application metric value generally refers to a set of values obtained after a measurement is performed on an application program or a component thereof in a trusted execution environment. These values are used to verify the integrity and authenticity of the application, ensuring that the application is not tampered with. Application custom data generally refers to data defined by an application according to its own requirements and contained in an attestation report. These data may be application-specific configurations, identification information, or other content that helps to prove application security and reliability. The user 140 confirms the attestation report, which may indicate that the credential management service passes the verification. Thus, the access credential for data access may be sent to the credential management service.

At block 402, the client 120 processes the target data generated by the client in the target application with the processing credential corresponding to the access credential.

The client 120 may not regularly upload the data resource generated in the target application to the cloud. For the uploaded data resources, the processing may be applied with the processing credential. For example, the specified data resource may be encrypted with the access credential, to obtain the target data.

At block 403, the client 120 may store the processed target data to the data storage side 116 by uploading the target data to the host device 110.

At block 404, the client 120 receives the data access authorization request from the use terminal of the data resource, the data resource comprising the target data. On the host device 110 side, a data access task, a data analysis task, and the like executed by the computing engine 112 may be utilized, the computing engine 112 executes the data access task or the data analysis task, and the like, which may be sent to the client 120 as a trigger instruction for generating and sending the data access authorization request. The client 120 may thus receive the data access authorization request from the use terminal of the data resource.

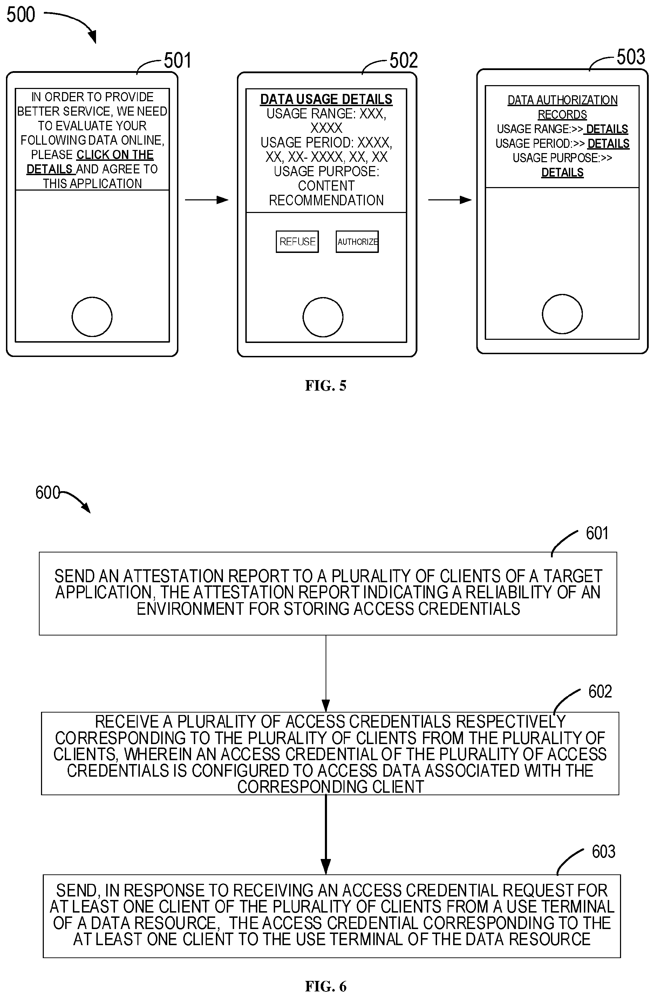

At block 405, the client 120 generates authorization information for the data access authorization request in response to a positive indication of the data access authorization. FIG. 5 shows a schematic diagram of an interaction interface 500 between the client 120 and the host device 110 according to some embodiments of the present disclosure. Referring to the interface 501, the client 120 receives the data access authorization request. In response to the user instruction of "click details", data usage details may be displayed, as shown in the interface 502. For example, the data usage details may include, for example, a usage range, a usage period, and a usage purpose of the data. In response to the positive indication, the authorization information may be generated. For example, the positive indication may be that the user 140 clicks "authorize" in the interface 502.

The authorization information may correspond to the data usage details, that is to say, the authorization information may indicate, for example, a usage range, a usage period, and a usage purpose of the data, etc. Based on the authorization information, the client 120 may also store the authorization record. Referring to the interface 503, the authorization record may correspond to the authorization information. That is, the authorization record may also comprise an authorized usage range, an authorized usage period, and an authorized usage purpose of the data, and the like.

For example, the authorized usage range of the data resource may indicate a category of the data resources generated in the target application. The authorized usage period may be one day, one hour, etc. The authorized usage purpose may be to only authorize the host device 110 to perform a certain data computing task or perform a certain data analysis task.

At block 406, the client 120 sends the authorization information to the use terminal of the data resource. The client 120 sends the authorization information to the use terminal of the data resource, so that the use terminal of the data resource may obtain the corresponding data resource. Through the above process, the authorization information makes the data access process more transparent, through defining the authorized usage range and the authorized usage period in detail, it is ensured that the data of the user is always controlled during use, and the data is prevented from being abused or unauthorized access. The user can clearly know which data is accessed and the time range of use, thereby improving the protection level of the data resource.

In some implementations, the credential management service is verified by: receiving the attestation report from the credential management service, the attestation report indicating a reliability of the environment for storing the access credentials; and verifying the credential management service based on the attestation report.

The attestation report may be sent by the credential management service. The attestation report may comprise information such as hardware trusted computing basic information, application metric values, application custom data, and hardware signatures. The attestation comprises a verification that can be performed by a target program in the client 120.

In some implementations, the authorization information comprises the access token for the client. In addition, the authorization information indicates at least one of the following: the authorized usage range, the authorized usage purpose, and the authorized usage period of the target data.

The authorization information comprises the access token of the client, and the access token may indicate identification information of the client 120. Based on the identification information, the credential management service configures each access credential entry to be composed of a unique identification information and a corresponding access credential. In addition, the authorization information may also correspond to the data usage details, that is to say, the authorization information may indicate, for example, the usage range, the usage period, and the usage purpose of the data .

FIG. 6 shows a schematic diagram of a data access process 600 according to some embodiments of the present disclosure. The data access process may be implemented in a credential management service. The data access procedure shown in FIG. 6 is described below with reference to FIG. 1.

At block 601, the credential management service sends the attestation report to the plurality of clients of the target application, the attestation report indicating the reliability of the environment for storing access credentials.

The attestation report may indicate the reliability of the environment for the credential management service storing the data resource. For example, the attestation report may comprise information such as hardware trusted computing basic information, an application metric value, application custom data, and a hardware signature. The credential management service may send the attestation report to the plurality of clients 120 of the target application to self-verify.

At block 602, the credential management service receives, from the plurality of clients 120, the plurality of access credentials respectively corresponding to the plurality of clients 120, the access credential of the plurality of access credentials is configured to access data associated with the corresponding client 120.

After the client 120 verifies the attestation report, the access credential may be uploaded to the access credential management database 114, which is managed by the credential management service. The credential management service configures each access credential entry as consisting of unique identification information and a corresponding access credential. The identification information may be a unique identification of the client 120, and the identification information may correspond to an access token of the client 120. The access credentials may then be used for accessing data associated with the corresponding client 120.

At block 603, the credential management service sends the access credential corresponding to the at least one client to the use terminal of the data resource in response to receiving the access credential request for at least one client of the plurality of clients from the use terminal of the data resource.

The host device 110, as the use terminal of the data resource, sends the data access authorization request for the data resource to the plurality of clients 120 of the target application in response to the demand of processing the data resource generated in the target application. After obtaining the authorization information of the at least one client of the plurality of clients for the data access authorization request, the access token of the at least one client may be determined based on the authorization information. Based on the access token of the at least one client, the host device 110 may send an access credential request for the data resource to the credential management service.

The credential management service sends the access credential corresponding to the at least one client to the use terminal of the data resource in response to the access credential request.

The access credential request may comprise at least an access token. The credential management service verifies the access credential request based on the access token of the at least one client in response to the access credential request comprising at least the access token of the at least one client. The access credential of the at least one client is sent to the use terminal of the data resource in response to the access credential request passing verification.

As discussed previously, the credential management service configures each access credential entry to consist of a unique identification information and a corresponding access credential, the access token may indicate identification information of the client. Based on this, the credential management service can quickly and accurately retrieve the corresponding access credential according to the identification information in the access credential management database 114 based on the structured storage mode. The access credential of the at least one client is sent to the use terminal of the data resource.

The access credential request may also include a security report indicating the reliability of the trusted execution environment 115 for processing the data resources. The credential management service sends the access credential of the at least one client to the use terminal of the data resource in response to the security report in the access credential request passing verification, the security report indicating the reliability of the environment for processing the data resource.

For the access credential, each access credential corresponds to a processing credential. That is, one processing credential and one access credential may constitute a credential pair. At the client 120, target data generated in the target application may be processed based on the processing credential. For example, the processing may include encryption processing. The processed target data is stored to the data storage side 116.

The host device 110 sends the access credential request for the data resource to the credential management service, which may include both the access token and the security report. The credential management service may determine a corresponding client 120 based on the access token, and obtain the corresponding access credential. The security report is used to prove that the trusted execution environment 115 of the computing engine 112 for processing data resources is secure and trusted and conforms to a predetermined security standard. The credential management service may perform verification on the security report, and if it is determined that the verification passes, send the access credential of the data resource to the host device 110.

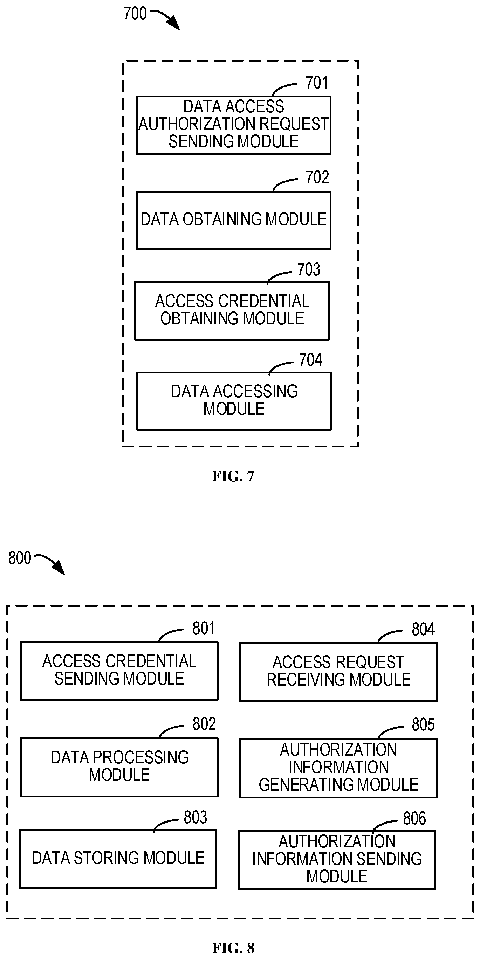

FIG. 7 shows a schematic structural block diagram of a data access apparatus 700 according to some embodiments of the present disclosure. The apparatus 700 may be implemented, for example, in or included in the host device 110. The various modules/components in the apparatus 700 may be implemented by hardware, software, firmware, or any combination thereof.

As shown, the apparatus 700 includes a data access authorization request sending module 701, configured to send, in response to a demand of processing the data resource generated in the target application, a data access authorization request for a data resource to a plurality of clients of a target application, the plurality of clients being associated with the data resource; a data obtaining module 702 configured to receive authorization information for the data access authorization request respectively from at least one of the plurality of clients; an access credential obtaining module 703 configured to obtain, based on the authorization information, at least one access credential respectively corresponding to the at least one client; and a data accessing module 704 configured to access target data associated with the at least one client in the data resource to process the target data.

In some embodiments, the data obtaining module 702 may be specifically configured to determine, based on the authorization information, an access token of the at least one client and send an access credential request for the data resource to a credential management service, the access credential request comprising at least the access token, and receive at least one access credential respectively corresponding to the at least one client from the credential management service.

In some implementations, the access credential request further comprises a security report indicating a reliability of an environment for processing the data resource.

In some embodiments, the data obtaining module 702 may be further configured to obtain the target data from a data storage side, wherein the target data is stored to the data storage side by the at least one client based on a received attestation report, and the attestation report indicates a reliability of an environment for storing the data resource.

In some embodiments, for a client of the at least one client, the target data stored to the data storage side is data that is generated in the target application, processed by the client with a processing credential corresponding to the access credential of the client and then is transmitted to the data storage side..

In some embodiments , the access credential access data resource is performed in a trusted execution environment, further comprising a data removing module based thereon. The data removing module is configured to, in response to a preset condition being satisfied, remove the target data and the access credential of the target data from the trusted execution environment, the preset condition comprising a termination of access to the target data or an expiry of an authorized usage period of the target data.

In some embodiments , the data access authorization request sending module 701 may be specifically configured to: determine, based on a data processing task to be executed, at least one data resource type corresponding to the data processing task, the data resource comprising data of the at least one data resource type; and generate the data access authorization request based on the at least one data resource type.

In some embodiments, the data access authorization request sending module 701 may be specifically configured to determine a plurality of data resource types corresponding to the data processing task; and determining the at least one data resource type based on association degrees between the data of the plurality of data resource types and the plurality of clients.

FIG. 8 shows a schematic structural block diagram of a data access apparatus 800 according to some embodiments of the present disclosure. The apparatus 800 may be implemented, for example, in or included in the client 120. The various modules/components in the apparatus 800 may be implemented by hardware, software, firmware, or any combination thereof.

As shown, the apparatus 800 comprises: an access credential sending module 801 configured to send, in response to a credential management service passing verification, an access credential for data access to the credential management service; a data processing module 802 configured to process, with a processing credential corresponding to the access credential, target data generated by the client in the target application; a data storing module 803 configured to store the processed target data to a data storage side; an access request receiving module 804 configured to receive a data access authorization request from a use terminal of a data resource, the data resource comprising the target data; an authorization information generating module 805 configured to generate, in response to a positive indication of the data access authorization request, authorization information for the data access authorization request; and an authorization information sending module 806 configured to send the authorization information to the use terminal of the data resource.

In some embodiments , the access credential sending module 801 may be further configured to receive an attestation report from the credential management service, the attestation report indicating a reliability of an environment for storing the access credential; and verify the credential management service based on the attestation report.

In some embodiments , the authorization information comprises an access token for the client.

In some embodiments, the authorization information indicates at least one of an authorized usage range, an authorized usage purpose, or an authorized usage period of the data resource.

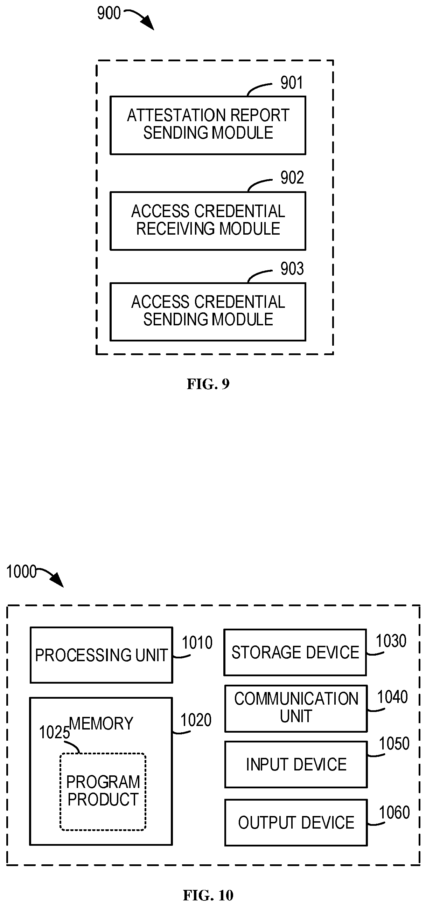

FIG. 9 shows a schematic structural block diagram of a data access apparatus 900 according to some embodiments of the present disclosure. The apparatus 900 may be implemented, for example, in or comprised in a credential management service. The various modules/components in the apparatus 900 may be implemented by hardware, software, firmware, or any combination thereof.

As shown, the apparatus 900 comprises an attestation report sending module 901 configured to send an attestation report to a plurality of clients of a target application, the attestation report indicating a reliability of an environment for storing access credentials; an access credential receiving module 902 configured to receive a plurality of access credentials respectively corresponding to the plurality of clients from the plurality of clients, where an access credential of the plurality of access credentials is configured to access data associated with the corresponding client; and an access credential sending module 903 configured to send, in response to receiving an access credential request for at least one client of the plurality of clients from a use terminal of a data resource, the access credential corresponding to the at least one client to the use terminal of the data resource.

In some embodiments, the access credential corresponding to a client of the plurality of clients comprises a corresponding processing credential for the client to process the target data generated in the target application, the processed target data being stored to a data storage side.

In some embodiments, the access credential sending module 903 may be specifically configured to verify the access credential request based on an access token of the at least one client in response to the access credential request comprising at least the access token of the at least one client; send the access credential of the at least one client to the use terminal of the data resource in response to the access credential request passing verification.

In some embodiments, the access credential sending module 903 may be specifically configured to: in response to a security report in the access credential request passing verification, send the access credential of the at least one client to the use terminal of the data resource, the security report indicating a reliability of an environment for processing the data resource.

FIG. 10 illustrates a block diagram of an electronic device 1000 in which one or more embodiments of the present disclosure may be implemented. It should be understood that the electronic device 1000 illustrated in FIG. 10 is merely example and should not constitute any limitation on the functionality and scope of the embodiments described herein. The electronic device 1000 shown in FIG. 10 may comprise or be implemented as the host device 110, the client 120, or the credential management service of FIG. 1, the apparatus 700 of FIG. 7, the apparatus 800 of FIG. 8, or the apparatus 900 of FIG. 9.

As shown in FIG. 10, the electronic device 1000 is in the form of a general-purpose electronic device. The components of the electronic device 1000 may include, but are not limited to, one or more processors or processing units 1010, a memory 1020, a storage device 1030, one or more communication units 1040, one or more input devices 1050, and one or more output devices 1060. The processing unit 1010 may be an actual or virtual processor and configured to execute various processes according to programs stored in the memory 1020. In multiprocessor systems, multiple processing units execute computer-executable instructions in parallel to improve parallel processing capabilities of electronic device 1000.

Electronic device 1000 typically includes a plurality of computer storage media. Such media may be any available media accessible to the electronic device 1000, including, but not limited to, volatile and non-volatile media, removable and non-removable media. The memory 1020 may be volatile memory (e.g., registers, caches, random access memory (RAM)), non-volatile memory (e.g., read-only memory (ROM), electrically erasable programmable read-only memory (EEPROM), flash memory), or some combination thereof. Storage device 1030 may be a removable or non-removable medium and may include a machine-readable medium, such as a flash drive, magnetic disk, or any other medium, which may be capable of storing information and / or data and may be accessed within electronic device 1000.

The electronic device 1000 may further include additional removable / non-removable, volatile/non-volatile storage media. Although not shown in FIG. 8, a disk drive for reading or writing from a removable, nonvolatile magnetic disk (e.g., a "floppy disk") and an optical disk drive for reading or writing from a removable, nonvolatile optical disk may be provided. In these cases, each drive may be connected to a bus (not shown) by one or more data media interfaces. The memory 1020 may include a computer program product 1025 having one or more program modules configured to perform various methods or actions of various embodiments of the present disclosure.

The communication unit 1040 is configured to communicate with another electronic device through a communication medium. Additionally, the functionality of components of the electronic device 1000 may be implemented in a single computing cluster or multiple computing machines capable of communicating over a communication connection. Thus, the electronic device 1000 may operate in a networked environment using logical connections with one or more other servers, network personal computers (PCs), or another network node.

The input device 1050 may be one or more input devices, such as a mouse, a keyboard, a trackball, or the like. The output device 1060 may be one or more output devices, such as a display, a speaker, a printer, or the like. The electronic device 1000 may also communicate with one or more external devices (not shown) through the communication unit 1040 as needed, external devices such as storage devices, display devices, etc. , communicate with one or more devices that enable a user to interact with the electronic device 1000, or communicate with any device (e.g., a network card, a modem, etc. ) that enables the electronic device 1000 to communicate with one or more other electronic devices. Such communication may be performed via an input/output (I/O) interface (not shown).

According to example implementations of the present disclosure, a computer-readable storage medium having computer-executable instructions stored thereon is provided, wherein the computer-executable instructions are executed by a processor to implement the method described above. According to example implementations of the present disclosure, a computer program product is further provided, the computer program product being tangibly stored on a non-transitory computer-readable medium and including computer-executable instructions, the computer-executable instructions being executed by a processor to implement the method described above.

Aspects of the present disclosure are described herein with reference to flowcharts and/or block diagrams of methods, apparatuses, devices, and computer program products implemented in accordance with the present disclosure. It should be understood that each block of the flowchart and/or block diagram, and combinations of blocks in the flowcharts and /or block diagrams, may be implemented by computer readable program instructions.

These computer-readable program instructions may be provided to a processing unit of a general purpose computer, special purpose computer, or other programmable data processing apparatus to produce a machine, such that the instructions, when executed by a processing unit of a computer or other programmable data processing apparatus, produce means to implement the functions/acts specified in the flowchart and/or block diagram. These computer-readable program instructions may also be stored in a computer-readable storage medium that cause the computer, programmable data processing apparatus, and/or other devices to function in a particular manner, such that the computer-readable medium storing instructions includes an article of manufacture including instructions to implement aspects of the functions /acts specified in the flowchart and/or block diagram (s).

The computer-readable program instructions may be loaded onto a computer, other programmable data processing apparatus, or other apparatus, such that a series of operational steps are performed on a computer, other programmable data processing apparatus, or other apparatus to produce a computer-implemented process such that the instructions executed on a computer, other programmable data processing apparatus, or other apparatus implement the functions/acts specified in the flowchart and/or block diagram block or blocks.

The flowchart and block diagrams in the figures show architecture, functionality, and operation of possible implementations of systems, methods, and computer program products according to various implementations of the present disclosure. In this regard, each block in the flowchart or block diagram may represent a module, program segment, or portion of an instruction that includes one or more executable instructions for implementing the specified logical function. In some alternative implementations, the functions noted in the blocks may also occur in a different order than noted in the figures. For example, two consecutive blocks may actually be performed substantially in parallel, which may sometimes be performed in the reverse order, depending on the functionality involved. It is also noted that each block in the block diagrams and/or flowchart, as well as combinations of blocks in the block diagrams and/or flowchart, may be implemented with a dedicated hardware-based system that performs the specified functions or actions, or may be implemented in a combination of dedicated hardware and computer instructions.

Various implementations of the present disclosure have been described above, which are example, not exhaustive, and are not limited to the implementations disclosed. Many modifications and variations will be apparent to those of ordinary skill in the art without departing from the scope and spirit of the various implementations illustrated. The selection of the terms used herein is intended to best explain the principles of the implementations, practical applications, or improvements to techniques in the marketplace, or to enable others of ordinary skill in the art to understand the various implementations disclosed herein.

## Claims

1. A data access method (200) applied at a use terminal of a data resource, comprising:
sending (201), in response to a demand of processing the data resource generated in a target application, a data access authorization request for the data resource to a plurality of clients of the target application, the plurality of clients being associated with the data resource;
receiving (202) authorization information for the data access authorization request respectively from at least one of the plurality of clients;
obtaining (203), based on the authorization information, at least one access credential respectively corresponding to the at least one client; and
accessing (204), with the at least one access credential, target data associated with the at least one client in the data resource to process the target data.

2. The method (200) of claim 1, wherein obtaining at least one access credential respectively corresponding to the at least one client comprises:
determining, based on the authorization information, an access token of the at least one client;
sending an access credential request for the data resource to a credential management service, the access credential request comprising at least the access token; and
receiving at least one access credential respectively corresponding to the at least one client from the credential management service.

3. The method (200) of claim 2, wherein the access credential request further comprises a security report, the security report indicating a reliability of an environment for processing the data resource.

4. The method (200) of any one of the preceding claims, further comprising:
obtaining the target data from a data storage side, wherein the target data is stored to the data storage side by the at least one client based on a received attestation report indicating a reliability of an environment for storing the data resource.

5. The method (200) of claim 4, wherein for a client of the at least one client, the target data stored to the data storage side is data that is generated in the target application, processed by the client with a processing credential corresponding to the access credential of the client and then is transmitted to the data storage side.

6. The method (200) of any one of the preceding claims, wherein the accessing of the target data in the data resource associated with the at least one client is performed within a trusted execution environment, and the method further comprises:
in response to a preset condition being satisfied, removing the target data and the access credential of the target data from the trusted execution environment, the preset condition comprising a termination of access to the target data or an expiry of an authorized useage period of the target data.

7. The method (200) of any one of the preceding claims, wherein the data access authorization request is determined by:
determining, based on a data processing task to be executed, at least one data resource type corresponding to the data processing task, the data resource comprising data of the at least one data resource type; and
generating the data access authorization request based on the at least one data resource type.

8. The method (200) of claim 7, wherein determining at least one data resource type corresponding to the data processing task comprises:
determining a plurality of data resource types corresponding to the data processing task; and
determining the at least one data resource type based on association degrees between the data of the plurality of data resource types and the plurality of clients.

9. A data access method (400) applied at a client of a target application, comprising:
sending (401), in response to a credential management service passing verification, an access credential for data access to the credential management service;
processing (402), with a processing credential corresponding to the access credential, target data generated by the client in the target application;
storing (403) the processed target data to a data storage side;
receiving (404) a data access authorization request from a use terminal of a data resource, the data resource comprising the target data;
generating (405), in response to a positive indication of the data access authorization request, authorization information for the data access authorization request; and
sending (406) the authorization information to the use terminal of the data resource.

10. The method (400) of claim 9, wherein the credential management service is verified by:
receiving an attestation report from the credential management service, the attestation report indicating a reliability of an environment for storing access credentials; and
verifying the credential management service based on the attestation report.

11. The method (400) of claim 9 or 10, wherein the authorization information comprises an access token for the client.

12. The method (400) of one of the claims 9 to 11, wherein the authorization information indicates at least one of the following:
an authorized useage range of the target data,
an authorized useage purpose of the target data,
an authorized useage period of the target data.

13. A data access method (600) applied at a credential management service, comprising:
sending (601) an attestation report to a plurality of clients of a target application, the attestation report indicating a reliability of an environment for storing access credentials;
receiving (602) a plurality of access credentials respectively corresponding to the plurality of clients from the plurality of clients, wherein an access credential of the plurality of access credentials is configured to access data associated with the corresponding client; and
sending (603), in response to receiving at least one access credential request for at least one client of the plurality of clients from a use terminal of a data resource, the at least one access credential corresponding to the at least one client to the use terminal of the data resource.

14. An electronic device (1000), comprising:
at least one processing unit (1010); and
at least one memory (1020) coupled to the at least one processing unit (1010) and storing instructions for execution by the at least one processing unit (1010), the instructions, when executed by the at least one processing unit (1010), causing the electronic device (1000) to perform the method of any of claims 1 to 13.

15. A computer-readable storage medium having stored thereon a computer program executable by a processor to implement the method of any of claims 1 to 13.
